# EUROPÄISCHE PATENTSCHRIFT

(11) **EP 2 418 409 B1**
(45) Veröffentlichungstag und Bekanntmachung des Hinweises auf die Patenterteilung: **03.10.2012**
(21) Anmeldenummer: 10008420.1
(22) Anmeldetag: 12.08.2010
(51) Int. Cl.: F16K 35/02, F16K 31/60, F16K 11/074

(54) **Drehgriff**
Rotary handle
Poignée tournante

(43) Veröffentlichungstag der Anmeldung: 15.02.2012
(73) Patentinhaber: Grohe AG, 58675 Hemer (DE)
(72) Erfinder: Luig, Frank-Thomas, 58708 Menden (DE); Mönig, Benedikt, 59757 Arnsberg (DE); Geers, Carsten, 58644 Iserlohn (DE)

(56) Entgegenhaltungen:
- EP-A1- 0 333 088
- EP-B1- 0 801 255
- US-A- 4 753 418

## Beschreibung

Die Erfindung betrifft ein Verteilerventil für eine Sanitärarmatur gemäß dem Oberbegriff des Patentanspruchs 1.

Ein Ventil dieser Gattung ist in der EP 0 801 255 B1 offenbart. Bekannte Ventile dieser Art weisen als Ventilkörper zwei Keramikscheiben mit Durchtrittsöffnungen auf, wobei eine Keramikscheibe drehbar und die andere Keramikscheibe drehfest angeordnet ist. Sanitärarmaturen mit einem derartigen Verteilerventil besitzen folgende Funktionsweise: Heißwasser und Kaltwasser aus den Versorgungsleitungsnetzen werden zunächst mit Hilfe eines Mischventils zu temperiertem Wasser vermischt und über einen Mischwasserkanal dem Verteilerventil zugeführt. In der Absperrstellung des Verteilerventils sind die Durchtrittsöffnungen beider Keramikscheiben derart angeordnet, dass sie nicht in Überdeckung zueinander gelangen. Wird die drehbare Keramikscheibe entgegen dem Uhrzeigersinn um eine Drehachse gedreht, so gelangt die eine Durchtrittsöffnung der drehbaren Keramikscheibe zunehmend mit einer Durchtrittsöffnung der feststehenden Keramikscheibe in Überdeckung bis der volle Querschnitt der Durchtrittsöffnung für den Brauseanschluss freigegeben ist. Da für Brausen in der Regel eine geringere Durchflussleistung benötigt wird als für den Badewannenauslauf, ist der Querschnitt der Durchtrittsöffnungen für den Brausewasseranschluss kleiner als der Querschnitt der Durchtrittsöffnungen für den Wannenanschluss vorgesehen.
Wird die drehbare Keramikscheibe aus der Absperrstellung im Uhrzeigersinn gedreht, so gelangen in gleicher Weise die vorgesehenen Durchtrittsöffnungen für den Wannenabgang in Überdeckung, so dass zunehmend in Abhängigkeit vom Drehwinkel Mischwasser dem Badewannenauslauf zugeführt wird.
Allerdings kann mittels derartiger Verteilerventile keine Durchflussmenge pro Zeiteinheit eingestellt werden. Vielmehr ist die Durchflussmenge von der Größe der Durchtrittsöffnungen abhängig.

Vor diesem Hintergrund besteht die Aufgabe der Erfindung darin, ein Verteilerventil zu verbessern.

Die Aufgabe wird durch ein Verteilerventil mit den Merkmalen des Patentanspruchs 1 gelöst. Vorteilhafte Weiterbildungen sind Gegenstand von Unteransprüchen.
Mit der Erfindung wird ein Verteilerventil für eine Sanitärarmatur mit mindestens einem Wassereinlass in das Ventil und mindestens zwei Wasserauslässen aus dem Ventil bereitgestellt. Derartige Ventile werden auch als Umstellventile bezeichnet. Die zwei oder mehr Wasserauslässe sind üblicherweise zwei oder mehr Verbrauchern, beispielsweise bei einer Wannenarmatur einem Brausewasserabgang und einem Wannenabgang, zugeordnet. Weiterhin werden Verteilerventile für Brausesysteme mit einer Kopfbrause und mehreren Seitenbrausen eingesetzt. Das erfindungsgemäße Verteilerventil weist zudem eine verstellbare Steuereinrichtung zum Ansteuern jedes Wasserauslasses, ein Betätigungselement für die Steuereinrichtung und einen Drehgriff, der mit dem Betätigungselement der Steuereinrichtung verbindbar ist, auf. Üblicherweise besteht die Steuereinrichtung aus keramischen Ventilscheiben mit Wasserdurchtrittsöffnungen, wobei eine Ventilscheibe, die sogenannte Ventilsitzscheibe, fest und die andere Ventilscheibe, die sogenannte Steuerscheibe, drehbar angeordnet ist.
Das Verteilervonfil kann eine Ventilkartusche umfassen, in der die Steuereinrichtung angeordnet ist. Das Gehäuse der Ventilkartusche ist zylindrisch ausgebildet und wird an der Unterseite von einem Boden begrenzt. Aus der Oberseite des Kartuschengehäuses ragt das Betätigungselement, das üblicherweise als Spindel oder Stellhebel bezeichnet wird. Alternativ dazu kann die Steuereinrichtung in einer dafür vorgesehenen Kammer der Sanitärarmatur angeordnet sein. Der Drehgriff weist für jede Position der Steuereinrichtung, die einem voll geöffneten Wasserauslass zugeordnet ist, wenigstens eine Verstellbegrenzung auf, die mit einem zugehörigen Anschlagkörper, der ortsfest an dem Verteilerventil oder der Sanitärarmatur angeordnet ist, zusammenwirkt. Diese Versteilbegrenzung kann an dem Verbindungselement von Betätigungselement und Drehgriff vorgesehen sein. Das Verbindungselement ist mittels Riefenverzahnung drehfest mit dem Betätigungselement und drehfest mit dem Drehgriff verbunden und weist zudem an seinem äußeren Umfang eine Anschlagnase auf, die mit den Anschlagflächen des ortsfesten Anschlagkörpers zusammenwirkt und somit die Verdrehung des Drehgriffs nach beiden Drehrichtungen begrenzt.
Zudem weist der Drehgriff des erfindungsgemäßen Verteilerventils zur Einstellung der Durchflussmenge pro Zeiteinheit eine weitere Verstellbegrenzung mit wenigstens einem lösbaren Anschlagelement auf, die zur exakten Positionierung der Steuereinrichtung zwischen einer Absperrposition und geöffneten Position eines Wasserauslasses vorgesehen ist.

Gemäß einer Ausgestaltung der Erfindung ist der ortsfest angeordnete Anschlagkörper in Form eines Anschlagringes vorgesehen, der drehfest mit dem Verteilerventil, dem Gehäuse des Vertellerveritils oder einer Sanitärarmatur, in der das Verteilerventil angeordnet ist, verbunden ist. Hierzu kann der Anschlagring ebenfalls an seinem inneren Umfang eine Riefenverzahnung aufweisen.

Vorteilhafterweise ist die weitere Verstellbegrenzung, die das lösbare Anschlagelement umfasst, am Drehgriff in Form einer drehbaren oder schwenkbaren Taste oder als Drucktaste vorgesehen. Dieses lösbare Anschlagelement am Drehgriff ist gegen die Kraft einer Rückstellfeder betätigbar. Das lösbare Anschlagelement am Drehgriff weist zudem wenigstens eine Anschlagfläche auf, die zur Drehbegrenzung der Steuereinrichtung mit einer am ortsfest angeordneten Anschlagkörper vorgesehenen Anschlagnase zusammenwirkt. Diese Anschlagnase kann einerseits Teil des ortsfest angeordneten Anschlagkörpers sein oder an einem separaten Anschlagring vorgesehen sein, der drehfest, aber lösbar und verstellbar mit dem ortsfest angeordneten Anschlagkörper verbindbar ist. In letzterem Fall weisen sowohl der ortsfeste Anschlagkörper als auch der separate Anschlagring eine Riefenverzahnung auf, derart, dass der separate Anschlagring in axialer Richtung von dem ortsfesten Anschlagkörper abgezogen werden kann und nach Verdrehen und Neupositionierung der Anschlagnase wieder auf den ortsfesten Anschlagkörper aufgeschoben werden kann.

Gemäß einer weiteren Ausgestaltung der Erfindung weist der ortsfest angeordnete Anschlagkörper Rastelemente auf, die in der Ausgangsposition oder Verschlussstellung des Verteilerventils mit Ausnehmungen am Drehgriff zusammenwirken. Die Rastelemente können winkelförmig ausgebildet sein, wobei die Winkel unterschiedlich lange Schenkel aufweisen. Die Schenkel weisen an ihrem dem Anschlagkörper abgewandten Ende einen Rastwulst auf, der mit der Ausnehmung am Drehgriff zusammenwirkt. Somit ist bei dem Verteilerventil die Absperrstellung oder Null-Stellung mit einer Rastung gekennzeichnet. Um das Verteilerventil zu bedienen bzw. um die Steuereinrichtung aus der Absperrstellung zu bewegen, muss der Benutzer den Widerstand der Rastung überwinden.
Vorteilhafterweise ist die Steifigkeit der winkelförmigen Rastelemente je nach Drehrichtung unterschiedlich, derart, dass ein Benutzer beim Verdrehen des Drehgriffs und beim Überwinden der Rastposition unterschiedliche Verdrehwiderstände wahrnimmt.

Eine Ausgestaltung der Erfindung sieht zudem vor, dass das lösbare Anschlagelement am Drehgriff in zwei Drehrichtungen wirksam Ist. Dazu weist das lösbare Anschlagelement zwei Anschlagflächen auf, von denen die eine mit einer Anschlagnase beim Drehen des Drehgriffs im Uhrzeigersinn und die andere mit einer weiteren Anschlagnase beim Drehen des Drehgriffs entgegen dem Uhrzeigersinn wirksam ist.

Gemäß einer Ausgestaltung der Erfindung ist das lösbare Anschlagelement an einer Adapterhülse vorgesehen, die drehfest in einer Griffhaube des Drehgriffs angeordnet ist. Vorteilhafterweise ist die Adapterhülse und/oder der Drehgriff selbst drehfest mit einem Betätigungselement des Ventils verbunden.

Ein Ausführungsbeispiel der Erfindung ist in der Zeichnung dargestellt und wird im Folgenden näher beschrieben. In den Zeichnungsunteriagen bezeichnen gleiche Bezugszeichen gleiche Funktionsteile. Es zeigt in der Zeichnung die
- Figur 1: einen Schnitt durch einen Teil einer Wannenarmatur mit einem erfindungsgemäßen Verteilerventil im montiertem Zustand;
- Figur 2: einen Schnitt durch einen Venüleinsatz eines Verteilerventils gemäß dem Stand der Technik;
- Figur 3: eine perspektivische Ansicht eines Drehgriffs und eines ortsfesten Anschlagkörpers für ein erfindungsgemäßes Verteilerventil;
- Figur 4a: einen Schnitt durch eine in Fig. 2 gezeigten Steuereinrichtung bestehend aus der drehbaren und drehfesten Ventilscheibe entlang der Schnittebene IV in der Absperrposition;
- Figur 4b: einen Schnitt durch den in Fig. 1 gezeigten Drehgriff entlang der Schnittebene IV, der mit der Scheibenstellung in Figur 4a korrespondiert;
- Figur 5a: einen Schnitt durch eine in Fig. 2 gezeigten Steuereinrichtung entlang der Schnittebene V bestehend aus der drehbaren und drehfesten Ventilscheibe in der Sparposition des Brauseabgangs;
- Figur 5b: einen Schnitt durch den in Fig. 1 gezeigten Drehgriff entlang der Schnittebene V, der mit der Scheibenstellung in Figur 5a korrespondiert;
- Figur 6a: einen Schnitt durch eine in Fig. 2 gezeigten Steuereinrichtung entlang der Schnittebene VI bestehend aus der drehbaren und drehfesten Ventilscheibe in der voll geöffneten Position für den Brauseabgang;
- Figur 6b: einen Schnitt durch den in Fig. 1 gezeigten Drehgriff entlang der Schnittebene VI, der mit der Scheibenstellung in Figur 6a korrespondiert;
- Figur 7a: einen Schnitt durch eine in Fig. 2 gezeigten Steuereinrichtung entlang der Schnittebene VII bestehend aus der drehbaren und drehfesten Ventilscheibe in der Sparposition des Wannenabgangs:
- Figur 7b: einen Schnitt durch den in Fig. 1 gezeigten Drehgriff entlang der Schnittebene VII, der mit der Scheibenstellung in Figur 8a korrespondiert;
- Figur 8a: einen Schnitt durch eine in Fig. 2 gezeigten Steuereinrichtung entlang der Schnittebene VIII bestehend aus der drehbaren und drehfesten Ventilscheibe in der voll geöffneten Position für den Wannenabgang;
- Figur 8b: einen Schnitt durch den in Fig. 1 gezeigten Drehgriff entlang der Schnittebene VIII, der mit der Scheibenstellung in Figur 8a korrespondiert.

In der Zeichnung sind gleiche oder entsprechende Elemente mit jeweils gleichen Bezugszeichen versehen.

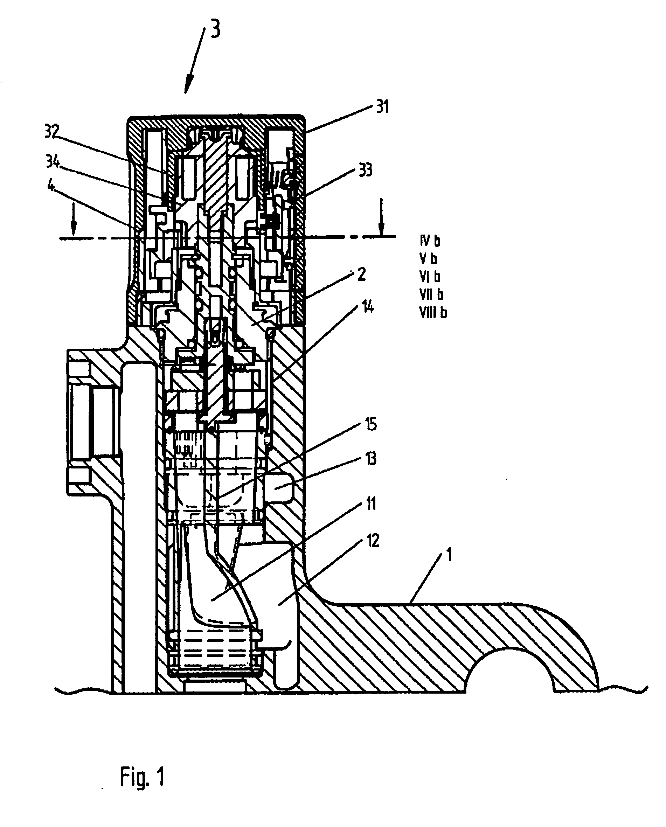

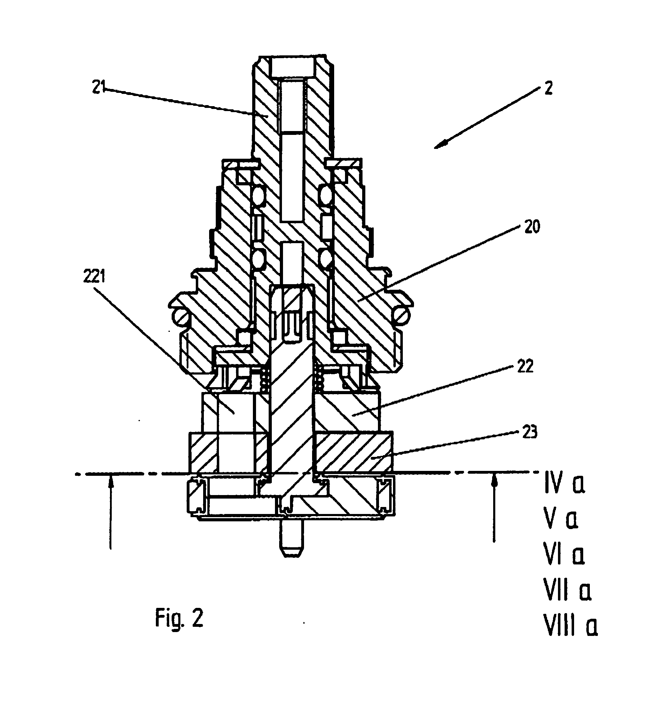

Figur 1 zeigt eine Wannenarmatur mit einem erfindungsgemäßen Verteilerventil, das in einer Kammer 14 des Armaturengehäuses 1 eingesetzt ist und mit einem Zulaufkanal 11 und zwei Ablaufkanälen 12, 13 in Verbindung steht. Dazu sind an dem Verteilerventil ein Wassereinlass und zwei Wasserauslässe vorgesehen. Das Verteilerventil umfasst einen Ventileinsatz 2 und einen Drehgriff 3, der drehfest mit dem Betätigungselement des Ventileinsatzes 2 verbunden ist. In dem Ventileinsatz 2 ist die Steuereinrichtung angeordnet, die zwei Ventilscheiben, nämlich eine ortsfest gehaltene Ventilsitzscheibe 23 und eine drehbare Steuerscheibe 22 beinhaltet. Wie in Figur 2 dargestellt ist in dem Ventileinsatz 2 als Betätigungselement eine in einem Kopfstück 20 geführte Spindel 21 vorgesehen. Die Spindel 21 ist dazu drehfest mit der Steuerscheibe 22 verbunden, die dichtend an der ortsfest gehaltenen Ventilsitzscheibe 23 anliegt.

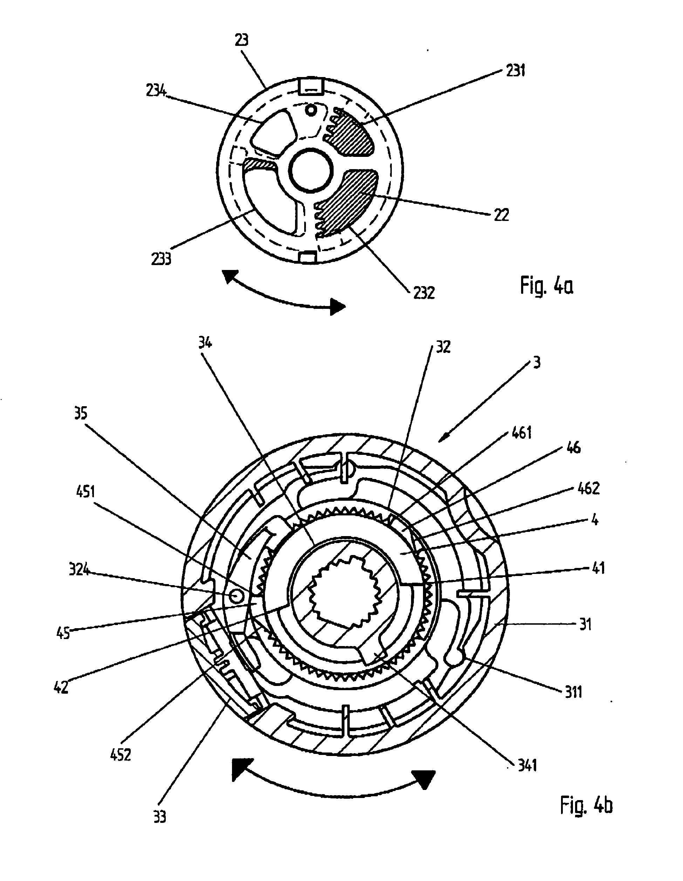

In den Figuren 4a, 5a, 6a, 7a und 8a ist die Ventilsitzscheibe 23 mit möglichen Einstellpositionen der Steuerscheibe 22 näher dargestellt. In der Ventilsitzscheibe 23 sind vier Öffnungen 231, 232, 233, 234 angeordnet, die jeweils die Form eines Kreisringausschnitts aufweisen.
In der Einbausituation des Verteiferventils liegt der Ventileinsatz 2 gedichtet am Boden der Kammer 14 im Armaturengehäuse 1 an, wobei die Ventilsitzscheibe 23 so angeordnet ist, dass der Ablaufkanal 13 für den Brauseabgang gedichtet an der Öffnung 231,234 und der Ablaufkanal 12 für den Wannenabgang gedichtet an der Öffnung 232,233 angeschlossen ist.
Die Steuerscheibe 22 weist eine zu den Öffnungen 231, 232 korrespondierende Öffnung 221 auf, die ebenfalls eine Kreisringausschnittform besitzt und sich über einen Öffnungswinkel von ca. 180° erstreckt, wobei die Öffnung aus Festigkeitsgründen durch einen Steg 222 unterteilt ist.

Auf den aus dem Armaturengehäuse 1 vorstehenden Teil des Kopfstücks 20 ist ein feststehender Anschlagring 4 aufgesteckt. Auf dem aus dem Kopfstück 20 vorstehenden Ende der Spindel 21 ist ein Drehgriff 3 drehtest befestigt. Der Drehgriff 3 in der dargestellten Ausführungsform umfasst hierbei mehrere Teile, eine äußere Griffhülle 31, die dekorativen Zwecken dient, sowie eine innere Hülse 32, an der feste und bewegliche Anschlagkörper bzw. Anschlagelemente angeordnet sind.
An der Außenmantelfläche der Griffhülle 31 ist eine bewegliche Drucktaste 33 vorgesehen, die auf eine an der inneren Hülse 32 angeordnete Anschlagwippe 321 wirkt.

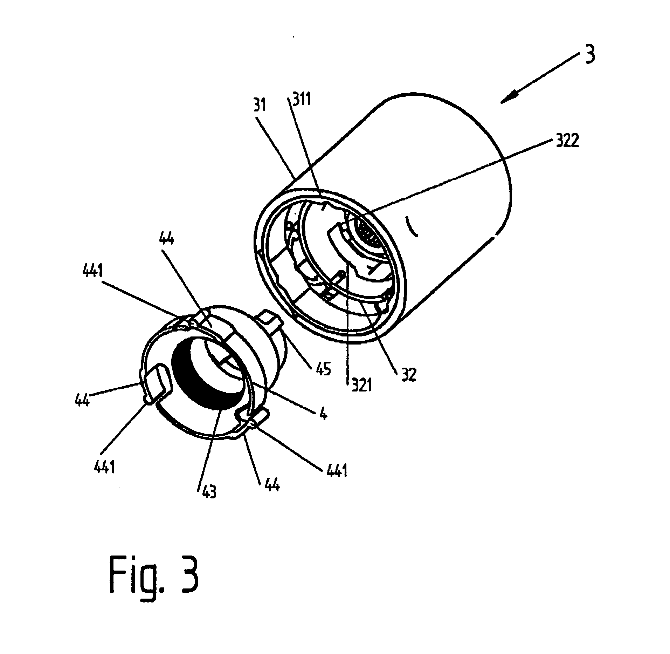

Aus Figur 3 und den Figuren 4b bis 8b wird deutlich, dass der Anschlagring 4 am Innenbereich mit einer Riefenverzahnung 43 versehen ist, und dass er an der dem Drehgriff 3 zugewandten Stirnseite mehrere Anschlagflächen 41, 42 aufweist, die in der Stecklage mit dem am Drehgriff 3 integrierten Vorsprüngen, die als Anschlagnase 341 dienen, zusammenwirken.
Weiterhin weist der Anschlagring 4 zusätzlich zwei mit Abstand zueinander angeordnete radial vorstehende Anschlagnasen 45, 46 auf, deren Anschlagflächen 451, 461 mit den Anschlagflächen 322, 323 der Anschlagwippe 321 zusammenwirken. An der dem Ventileinsatz 2 zugewandten Stirnseite des Anschlagrings 4 sind zudem drei Rastelemente in Form von winkelförmige Federbeinen 44 vorgesehen, die an ihrem Ende kleine Rastwülste 441 aufweisen.
In der Absperrposition des Verteilerventils ist der Drehgriff 3 derart auf dem Anschlagring 4 positioniert, dass die Rastwülste 441 in kleinen Ausnehmungen 311 liegen, die am Drehgriff 3 vorgesehen sind. Bei Verdrehung des Drehgriffs 3 muss somit erst der durch die Rastung erzeugte Widerstand überwunden werden. Die Steifigkeit der Federbeine 44 ist je nach Verdrehrichtung unterschiedlich vorgesehen, so dass beim Öffnen des Wannenabgangs ein spürbar anderes Drehmoment beim Verdrehen des Drehgriffs 3 aufgebracht werden muss, als beim Öffnen des Brauseabgangs. Beim Verschließen des Verteilerventils rasten die Rastwülste 441 der Federbeine 44 wieder in die Ausnehmungen 311 am Drehgriff 3 ein, so dass der Benutzer die Absperrposition hörbar und/oder spürbar wahmehmen kann.

Der Anschlagring 4 kann bei abgenommenen Drehgriff 3 in der erforderlichen Drehstellung auf das Kopfstück 20 aufgesteckt werden. Am Außenmantel des Kopfstücks 20 ist eine Riefenverzahnung vorgesehen, die der am Anschlagring 4 ausgebildeten Riefenverzahnung 43 entspricht. Nach dem Befestigen des Drehgriffs 3 an der Spindel 21 ist das Verteilerventil einsatzfähig.

Die Figuren 4a bis 8b geben über die möglichen Stellpositionen des Verteilerventils Aufschluss, die mittels der am Drehgriff 3 vorgesehenen Anschläge erreicht werden können.
In der Figur 4a ist beispielsweise die Absperrposition des Verteilerventils anhand der Stellung der Steuerscheibe 22 und der Ventilsitzscheibe 23 dargestellt. In der zugehörigen Figur 4b ist die entsprechende Anschlagsituation im Drehgriff 3 dargestellt.
Aus der Figur 4a wird deutlich, dass in der Absperrposition des Verteilerventils die Öffnung 231, die in Verbindung mit dem Brauseabgang steht, und die Öffnung 232, die in Verbindung mit dem Wannenabgang steht, vollkommen von der Steuerscheibe 22 verschlossen sind.
In dieser Position liegen die Rastwülste 441 der Federbeine 44 des Anschlagrings 4 in den Ausnehmungen 311 des Drehgriffs 3.

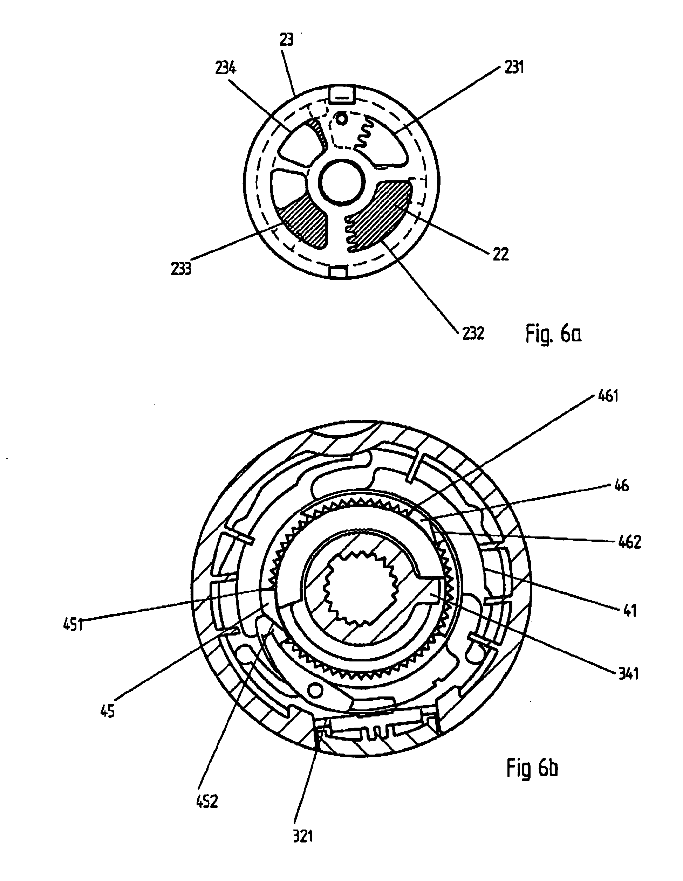

Durch Verdrehen des Drehgriffs 3 gegen den Uhrzeigersinn gelangen die Öffnung 231 der Ventilsitzscheibe und die Öffnung 221 der Steuerscheibe 22 zunehmend in Überdeckung, so dass der Ablaufkanal zur Brause zunehmend freigegeben wird.

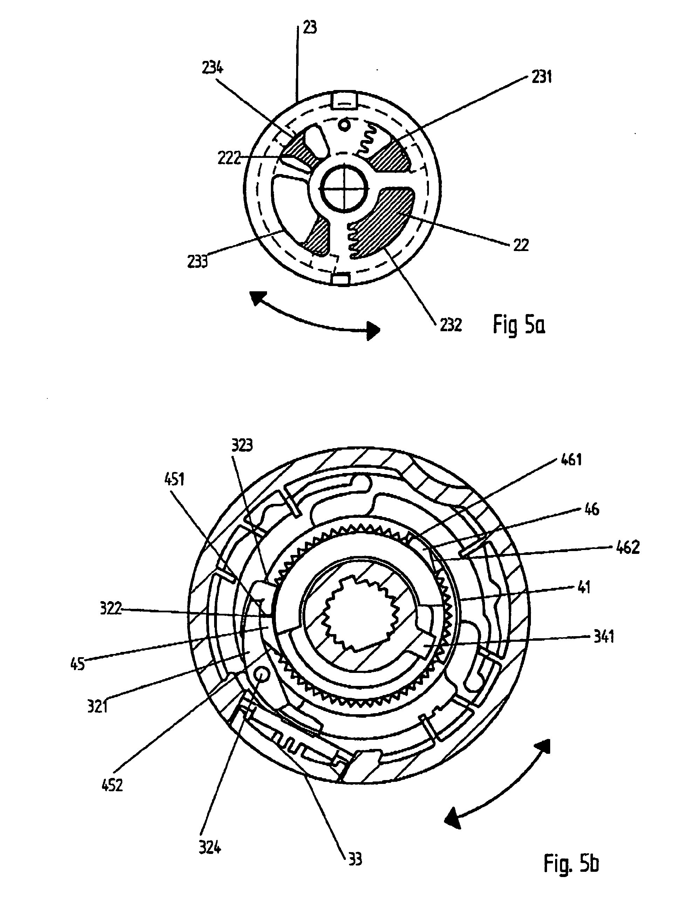

In Figur 5a wird deutlich, dass die Öffnung 231, die mit dem Brauseabgang in Verbindung steht, teilweise geöffnet ist, da sie durch die Öffnung 221 der Steuerscheibe 22 freigegeben wird. Durch die Wahl der Größe der sich überdeckenden Öffnungen 231. 221 kann nun eine vorbestimmte Durchflussmenge zum Brauseabgang eingestellt werden. Diese gewünschte Position der Ventilscheiben 22, 23 und der Öffnungen zueinander wird durch das Zusammenwirken der Anschlagfläche 451 der Anschlagnase 45 am Anschlagring 4 und der Anschlagfläche 322 der Anschlagwippe 321 am Drehgriff 3 bestimmt. Durch die zusätzliche Verstellbegrenzung des Verteilerventils und die bewusste Begrenzung der Durchflussmenge wird somit an der Sanitärarmatur eine zusätzliche Sparfunktion oder Sparstellung realisiert. Der Benutzer muss das lösbare Anschlagelement, in diesem Fall die Anschlagwippe 321, erst durch Betätigen der Drucktaste 33 am Drehgriff 3 aus der Anschlagposition bewegen, bevor eine größere Durchflussmenge durch die Wasseraustrittsöffnung 231 zu dem Brauseabgang gelangen kann.
Im vorliegenden Ausführungsbeispiel sind die Anschlagnasen 45, 46 an einem zusätzlichen Anschlagring angeformt, der mittels einer Riefenverzahnung drehfest auf dem ersten ortsfesten Anschlagring 4 aufgeschoben ist. Alternativ dazu könnten auch zwei weitere Anschlagringe mit jeweils einer Anschlagnase vorgesehen sein. Durch die letztgenannte Ausführungsform könnten die jeweiligen Anschlagpositionen und somit auch die entsprechenden Durchflussmengen variabel festgelegt werden.
Durch die Betätigung der äußeren Drucktaste 33 am Drehgriff 3 wird die Anschlagwippe 321 um ihre Drehachse 324 verschwenkt, wodurch ebenfalls auch die Anschlagfläche 322 aus der Eingriffsebene der Anschlagnase 45 verschwenkt wirkt. Die Anschlagwippe 321 und die Anschlagnase 45 stehen somit nicht mehr miteinander im Eingriff, so dass die Anschlagnase 45 bei einem weiteren Verdrehen des Drehgriffs 3 in Pfeilrichtung überwunden wird.
In der in Figur 6a dargestellten Situation der Ventilscheiben 22 und 23 ist die Öffnung 231, die mit dem Brauseabgang in Verbindung steht, voll geöffnet, so dass die maximal mögliche Wassermenge zur Brause gelangen kann. Diese Endposition wird dem Benutzer ebenfalls durch eine Verstellbegrenzung angezeigt. Im Gegensatz zu dem überwindbaren Anschlag bei der Sparposition wird ein weiteres Verdrehen des Drehgriffs 3 nach dem Erreichen der Endposition der Steuereinrichtung durch Festanschläge verhindert. Hier wirken eine Anschlagfläche der Anschlagnase 341, die drehfest mit dem Drehgriff 3 gekoppelt ist, und die Anschlagfläche 41 des ortsfesten Anschlagrings 4 zusammen.
Der Drehgriff 3 kann aus dieser Position nur noch im Uhrzeigersinn verdreht werden. Beim Zurückdrehen des Drehgriffs 3 in die Absperrposition wird die Durchflussmenge mittels des Verteilerventils entsprechend dem sich verringernden Öffnungsquerschnitt der Öffnung 231 reduziert. Bei dieser Drehbewegung gleitet die lösbare Anschlagwippe 321 über die Schräge 452 der Anschlagnase 45 hinweg. Sobald die Rastelemente 44 des Anschlagrings 4 wieder in die Ausnehmungen 311 am Drehgriff 3 einrasten, ist wiederum die in den Figuren 4a und 4b gezeichnete Absperrposition erreicht.

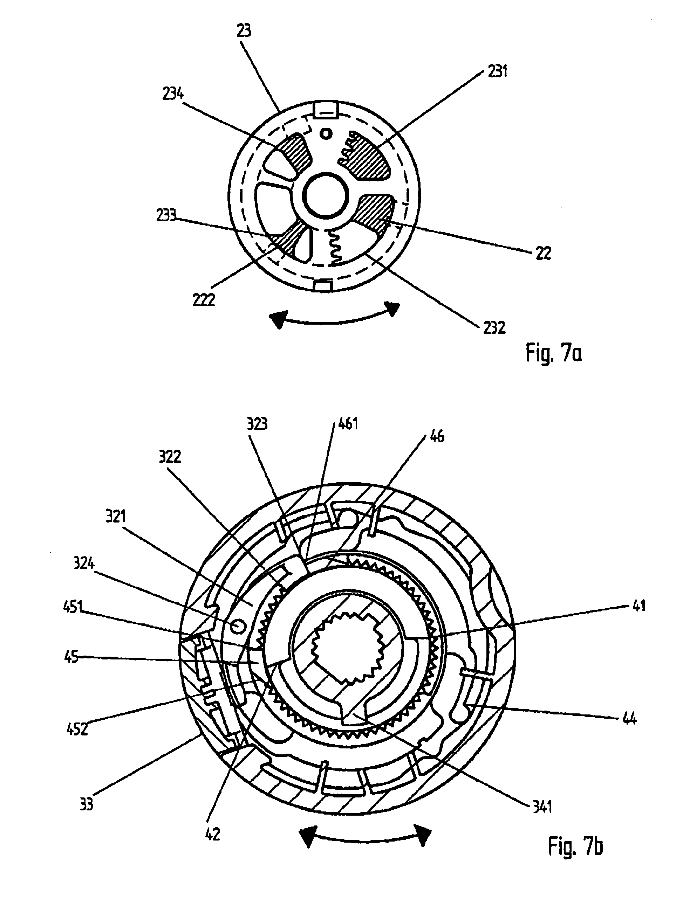

Durch Verdrehen des Drehgriffs 3 in Uhrzeigerrichtung aus der Absperrposition gelangen die Öffnung 232 der Ventilsitzscheibe und die Öffnung 221 der Steuerscheibe 22 zunehmend in Überdeckung, so dass der Ablaufkanal zur Wanne zunehmend freigegeben wird. In Figur 7a wird deutlich, dass die Öffnung 232, die mit dem Wannenabgang in Verbindung steht, teilweise geöffnet ist, da sie durch die Öffnung 221 der Steuerscheibe 22 freigegeben wird. Durch die Wahl der Größe der sich überdeckenden Öffnungen 231, 221 kann nun eine vorbestimmte Durchflussmenge zum Wannenabgang eingestellt werden. Diese gewünschte Position der Ventilscheiben 22, 23 und der Öffnungen zueinander, wird durch das Zusammenwirken der Anschlagfläche 461 der Anschlagnase 46 am Anschlagring 4 und der Anschlagfläche 322 der Anschlagwippe 321 bestimmt. Auch hier kann an der Sanitärarmatur eine zusätzliche Sparfunktion oder Sparstellung realisiert werden. Der Benutzer muss die Anschlagwippe 321 wiederum erst durch Betätigen der Drucktaste 33 am Drehgriff 3 aus der Anschlagposition bewegen, bevor eine größere Durchflussmenge durch die Wasseraustrittsöffnung 232 zum Wannenabgang gelangen kann.
Durch die Betätigung der äußeren Drucktaste 33 am Drehgriff 3 wird die Anschlagwippe 321 um ihre Drehachse 324 verschwenkt, wodurch ebenfalls auch die Anschlagfläche 323 aus der Eingriffsebene der Anschlagnase 46 verschwenkt wirkt. Die Anschlagwippe 321 und die Anschlagfläche 461 stehen somit nicht mehr miteinander im Eingriff, so dass die Anschlagnase 46 bei einem weiteren Verdrehen des Drehgriffs 3 entgegen der Uhrzeigerrichtung überwunden wird.

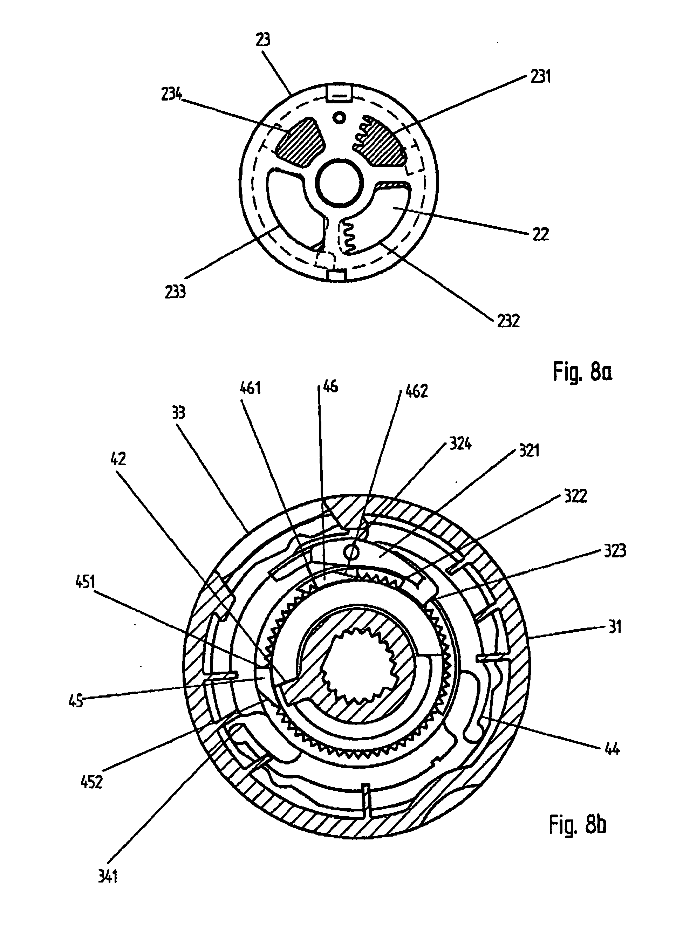

In der in Figur 8a dargestellten Situation der Ventilscheiben 22 und 23 ist die Öffnung 232, die mit dem Wannenabgang in Verbindung steht, voll geöffnet, so dass die maximal mögliche Wassermenge zur Wanne gelangen kann. Diese Endposition wird dem Benutzer ebenfalls durch eine Verstellbegrenzung angezeigt. Hier wirken eine Anschlagfläche der Anschlagnase 341, die drehfest mit dem Drehgriff 3 gekoppelt ist, und die Anschlagfläche 42 des ortsfesten Anschlagrings 4 zusammen.

### Bezugszeichenliste

- 1: Armaturengehäuse
- 11: Zulaufkanal
- 12: Ablaufkanal Wanne
- 13: Ablaufkanal Brause
- 14: Kammer für Verteilerventil
- 2: Venfileinsatz
- 20: Kopfstück Ventileinsatz
- 21: Spindel, Betätigungselement
- 22: Steuerscheibe
- 221: Öffnung
- 222: Steg
- 23: Ventilsitzscheibe
- 231: Öffnung - Verbindung zu Ablaufkanal Brause
- 232: Öffnung - Verbindung zu Ablaufkanal Wanne
- 233: Öffnung
- 234: Öffnung
- 3: Drehgriff
- 31: Griffhaube, Griffhülle
- 311: Ausnehmungen
- 32: Adapterhülse, Innengriff
- 321: Anschlagwippe, lösbares Anschlagelement
- 322: erste Anschlagfläche der Anschlagwippe
- 323: zweite Anschlagfläche der Anschlagwippe
- 324: Drehachse
- 33: Drucktaste
- 34: Kopplungselement Spindel-Drehgriff
- 341: Anschlagnase
- 4: Anschlagkörper, Anschlagring
- 41: Anschlagfläche
- 42: Anschlagfläche
- 43: Riefenverzahnung
- 44: Rastelement, Federbein
- 441: Rastwulst
- 45: erste Anschlagnase
- 451: Anschlagfläche der ersten Anschlagnase
- 452: Schräge der ersten Anschlagnase
- 46: zweite Anschlagnase
- 461: Anschlagfläche der zweiten Anschlagnase
- 462: Schräge der zweiten Anschlagnase

## Patentansprüche

1. Verteilerventil für eine Sanitärarmatur mit
- mindestens einem Wassereinlass in das Ventil
- mindestens zwei Wasserauslässen aus dem Ventil
einem Ventileisatz (2), der aus
-- einer verstellbaren Steuereinrichtung (22, 23) zum Ansteuern jedes Wasserauslasses und
-- einem Betätigungselement (21) für die Steuereinrichtung bestecht und
- einem Drehgriff (3),
-- der mit dem Betätigungselement (21) der Steuereinrichtung (22,23) verbunden ist
-- der für jede Position der Steuereinrichtung (22, 23), die einem voll geöffneten Wasserauslass zugeordnet ist, eine Verstellbegrenzung (341) aufweist, die mit einem zugehörigen ortsfest an dem Ventileimatz (2) angeordneten Anschlagkörper (4) zusammenwirkt,
**dadurch gekennzeichnet, dass**
- der Drehgriff (3) zur Durchflussmengenbegrenzung eine weitere Verstellbegrenzung mit wenigstens einem lösbaren Anschlagelement (321) aufweiset, die zur Positionierung der Steuereinrichtung (22, 23) zwischen einer Absperrposition und geöffneten Position eines Wasserauslasses vorgesehen ist

2. Verteilerventil nach Anspruch 1, **dadurch gekennzeichnet, dass** der ortsfest angeordnete Anschlagkörper (4) in Form eines Anschlagringes vorgesehen ist, der drehfest mit dem Verteilerventil, einem Kopfteil des Verteilerventils oder einem Armaturengehäuse (1), in der das Verteilerventil angeordnet ist, verbunden ist.

3. Verteilerventil nach Anspruch 1 oder 2, **dadurch gekennzeichnet, dass** das lösbare Anschlagelement (321) am Drehgriff (3) in Form einer drehbaren oder schwenkbaren Taste oder als Drucktaste vorgesehen ist.

4. Verteilerventil nach einem der vorhergehenden Ansprüche, **dadurch gekennzeichnet, dass** das lösbare Anschlagelement (321) am Drehgriff (3) gegen die Kraft einer Rückstellfeder betätigbar ist.

5. Verteilerventil nach einem der vorhergehenden Ansprüche, **dadurch gekennzeichnet, dass** das lösbare Anschlagelement (321) am Drehgriff (3) wenigstens eine Anschlagfläche (322, 323) aufweist, die zur Drehbegrenzung der Steuereinrichtung mit einer am ortsfest angeordneten Anschlagkörper (4) vorgesehenen Anschlagnase (45, 46) zusammenwirkt.

6. Verteilerventil nach Anspruch 5, **dadurch gekennzeichnet, dass** die Anschlagnase (45. 46) an einem separaten Anschlagring vorgesehen ist, der drehfest, aber lösbar und verstellbar mit dem ortsfest angeordneten Anschlagkörper (4) verbindbar ist.

7. Verteilerventil nach Anspruch 6, **dadurch gekennzeichnet, dass** der separate Anschlagring über eine Riefenverzahnung mit dem ortsfest angeordneten Anschlagkörper (4) verbindbar ist.

8. Verteilerventil nach einem der vorhergehenden Ansprüche, **dadurch gekennzeichnet, dass** der ortsfest angeordnete Anschlagkörper (4) Rastelemente (44) aufweist, die in der Ausgangsposition oder Verschlussstellung des Verteilerventils mit Ausnehmungen (311) am Drehgriff (3) zusammenwirken.

9. Verteilerventil nach Anspruch 8, **dadurch gekennzeichnet, dass** die Rastelemente (44) in Form von L-förmigen Schenkeln vorgesehen sind, die an ihrem dem Anschlagkörper (4) abgewandten Ende einen Rastwulst (441) aufweisen, der mit der Ausnehmung (311) am Drehgriff (3) zusammenwirkt.

10. Verteilerventil nach Anspruch 8 oder 9, **dadurch gekennzeichnet, dass** die Steifigkeit der Rastelemente (44) je nach Drehrichtung unterschiedlich ist, derart, dass ein Benutzer beim Verdrehen des Drehgriffs (3) und beim Überwinden der Rastposition unterschiedliche Verdrehwiderstände wahrnimmt.

11. Verteilerventil nach einem der vorhergehenden Ansprüche, **dadurch gekennzeichnet, dass** das lösbare Anschlagelement (321) am Drehgriff (3) in zwei Drehrichtungen wirksam ist.

12. Verteilerventil nach Anspruch 11, **dadurch gekennzeichnet, dass** das lösbare Anschlagelement (321) zwei Anschlagflächen (322, 323) aufweist, von denen die eine mit einer Anschlagnase (46) beim Drehen im Uhrzeigersinn und die andere mit einer weiteren Anschlagnase (45) beim Drehen entgegen dem Uhrzeigersinn wirksam ist.

13. Verteilerventil nach einem der vorhergehenden Ansprüche, **dadurch gekennzeichnet, dass** das lösbare Anschlagelement (321) an einer Adapterhülse (32) vorgesehen ist, die drehfest in einer Griffhaube (31) des Drehgriffs (3) angeordnet ist.

14. Verteilerventil nach Anspruch 13, **dadurch gekennzeichnet, dass** die Adapterhülse (32) und/oder der Drehgriff (3) drehfest mit einem Betätigungselement (21) des Ventils verbunden sind.

## Claims

1. Distributor valve for a sanitary fitting, having
- at least one water inlet into the valve
- at least two water outlets out from the valve
- a valve insert (2) which consists of
-- a movable control device (22, 23) for selecting each water outlet and
-- an actuating element (21) for the control device
and
- a grippable rotary part (3)
-- which is connected to the actuating element (21) of the control device (22, 23),
-- which has, for each position of the control device (22, 23) that is associated with a fully opened water outlet, a movement limiter (341) which co-operates with an associated stopping body (4) arranged in a fixed position on the valve insert (2),
**characterised in that**
- the grippable rotary part (3) has, for limiting the flow-through amount, a further movement limiter having at least one releasable stopping element (321), which limiter is provided for positioning the control device (22, 23) between a shut-off position and an opened position of a water outlet.

2. Distributor valve according to claim 1, **characterised in that** the stopping body (4) arranged in a fixed position is provided in the form of a stopping ring, which is connected, in a manner preventing relative rotation, to the distributor valve, a head part of the distributor valve or a fitting housing (1) in which the distributor valve is arranged.

3. Distributor valve according to claim 1 or 2, **characterised in that** the releasable stopping element (321) on the grippable rotary part (3) is provided in the form of a rotatable or pivotable button or in the form of a push-button.

4. Distributor valve according to one of the preceding claims, **characterised in that** the releasable stopping element (321) on the grippable rotary part (3) is actuatable against the force of a restoring spring.

5. Distributor valve according to one of the preceding claims, **characterised in that** the releasable stopping element (321) on the grippable rotary part (3) has at least one stopping surface (322, 323) which co-operates, for limitation of the rotation of the control device, with a stopping projection (45, 46) provided on the stopping body (4) arranged in a fixed position.

6. Distributor valve according to claim 5, **characterised in that** the stopping projection (45, 46) is provided on a separate stopping ring which is connectible, in a manner preventing relative rotation but releasably and movably, to the stopping body (4) arranged in a fixed position.

7. Distributor valve according to claim 6, **characterised in that** the separate stopping ring is connectible to the stopping body (4) arranged in a fixed position by means of a grooved tooth arrangement.

8. Distributor valve according to one of the preceding claims, **characterised in that** the stopping body (4) arranged in a fixed position has catching elements (44) which, in the home position or closed position of the distributor valve, co-operate with recesses (311) in the grippable rotary part (3).

9. Distributor valve according to claim 8, **characterised in that** the catching elements (44) are provided in the form of L-shaped limbs which have, on their end remote from the stopping body (4), a catching bead (441), which co-operates with the recess (311) in the grippable rotary part (3).

10. Distributor valve according to claim 8 or 9, **characterised in that** the rigidity of the catching elements (44) differs according to the direction of rotation in such a way that a user, when rotating the grippable rotary part (3) and overcoming the catching position, experiences different resistances to rotation.

11. Distributor valve according to one of the preceding claims, **characterised in that** the releasable stopping element (321) on the grippable rotary part (3) is active in two directions of rotation.

12. Distributor valve according to claim 11, **characterised in that** the releasable stopping element (321) has two stopping surfaces (322, 323), one of which is active by means of a stopping projection (46) when turning in the clockwise direction and the other of which is active by means of a further stopping projection (45) when turning in the anti-clockwise direction.

13. Distributor valve according to one of the preceding claims, **characterised in that** the releasable stopping element (321) is provided on an adaptor sleeve (32) which is arranged in a grippable outer part (31) of the grippable rotary part (3) in a manner preventing relative rotation.

14. Distributor valve according to claim 13, **characterised in that** the adaptor sleeve (32) and/or the grippable rotary part (3) are connected to an actuating element (21) of the valve in a manner preventing relative rotation.

## Revendications

1. Soupape de distribution pour une robinetterie sanitaire comportant :
- au moins une entrée d'eau dans la soupape,
- au moins deux sorties d'eau de la soupape,
- un mécanisme de soupape (2) constitué :
- d'un dispositif de commande réglable (22, 23) pour commander chacune des sorties d'eau, et
- d'un élément d'actionnement (21) du dispositif de commande, et
- une poignée tournante (3),
- qui est reliée à l'élément d'actionnement (21) du dispositif de commande (22, 23),
- qui comporte, pour chacune des positions du dispositif de commande (22, 23) à laquelle est associée une sortie d'eau totalement ouverte, un élément de limitation réglable (341) qui coopère avec un corps de butée (4) associé, monté fixe sur le mécanisme de soupape (2),
**caractérisée en ce que**
la poignée tournante (3) comporte, pour limiter le débit, un autre élément de limitation réglable muni d'au moins un élément de butée amovible (321) conformé pour permettre de positionner le dispositif de réglage (22, 23) entre une position d'arrêt et une position ouverte d'une sortie d'eau.

2. Soupape de distribution conforme à la revendication 1,
**caractérisée en ce que**
le corps de butée fixe (4) est réalisé sous la forme d'une bague de butée qui est reliée solidairement en rotation avec la soupape de distribution, un élément de tête de la soupape de distribution ou un boitier de robinetterie (1) dans lequel est montée la soupape de distribution.

3. Soupape de distribution conforme à la revendication 1 ou 2,
**caractérisée en ce que**
l'élément de butée amovible (321) est prévu sur la poignée tournante (3) sous la forme d'une touche mobile en rotation ou en pivotement ou sous la forme d'un bouton poussoir.

4. Soupape de distribution conforme à l'une des revendications précédentes,
**caractérisée en ce que**
l'élément de butée amovible (321) monté sur la poignée tournante (3) peut être manoeuvré contre la force d'un ressort de rappel.

5. Soupape de distribution conforme à l'une des revendications précédentes,
**caractérisée en ce que**
l'élément de butée amovible (321) monté sur la poignée tournante (3) comporte au moins une surface de butée (322, 323) qui coopère avec une came de butée (45, 46) prévue sur le corps de butée fixe (4) pour limiter le mouvement de rotation du dispositif de commande.

6. Soupape de distribution conforme à la revendication 5,
**caractérisée en ce que**
la came de butée (45, 46) est montée sur une bague de butée indépendante pouvant être reliée solidairement en rotation mais de manière amovible et réglable avec le corps de butée fixe (4).

7. Soupape de distribution conforme à la revendication 6,
**caractérisée en ce que**
la bague de butée indépendante peut être reliée par l'intermédiaire d'une denture cannelée avec le corps de butée fixe (4).

8. Soupape de distribution conforme à l'une des revendications précédentes,
**caractérisée en ce que**
le corps de butée fixe (4) comporte des éléments d'encliquetage (44) qui coopèrent, dans la position de sortie ou dans la position de fermeture de la soupape de distribution avec des évidements (311) situés sur la poignée tournante (3).

9. Soupape de distribution conforme à la revendication 8,
**caractérisée en ce que**
les éléments d'encliquetage (44) sont réalisés sous la forme de branches en forme de L qui comportent, à leur extrémité située à l'opposé du corps de butée (4), un bourrelet d'encliquetage (441) qui coopère avec l'évidement (311) situé sur la poignée tournante (3).

10. Soupape de distribution conforme à la revendication 8 ou 9,
**caractérisée en ce que**
la rigidité de l'élément d'encliquetage (44) diffère selon le sens de rotation de sorte qu'en faisant tourner la poignée tournante (3) et en surmontant la position d'encliquetage (1) un utilisateur perçoive différentes résistances à la rotation.

11. Soupape de distribution conforme à l'une des revendications précédentes,
**caractérisée en ce que**
l'élément de butée amovible (321) monté sur la poignée tournante (3) est actif dans deux sens de rotation.

12. Soupape de distribution conforme à la revendication 11,
**caractérisée en ce que**
l'élément de butée amovible (321) comporte deux surfaces de butée (322, 323) dont l'une coopère avec une came de butée (46) lors d'une rotation dans le sens des aiguilles d'une montre alors que l'autre coopère avec une autre came de butée (45) lors d'une rotation dans le sens inverse des aiguilles d'une montre.

13. Soupape de distribution conforme à l'une des revendications précédentes,
**caractérisée en ce que**
l'élément de butée amovible (321) est situé sur un manchon adaptateur qui est monté solidairement en rotation dans un capot de préhension (31) de la poignée tournante (3).

14. Soupape de distribution conforme à la revendication 13,
**caractérisée en ce que**
le manchon adaptateur (32) et/ou la poignée tournante (3) est/sont relié(s) solidairement en rotation à un élément d'actionnement (21) de la soupape.
